# EUROPEAN PATENT APPLICATION

(11) **EP 0 689 316 A2**
(43) Date of publication of application: **27.12.1995**
(21) Application number: 95304083.9
(22) Date of filing: 14.06.1995
(51) Int. Cl.: H04L 9/32

(54) **Method and apparatus for user identification and verification of data packets in a wireless communications network**

(30) Priority: 22.06.1994 US 263706
(71) Applicant: AT&T Corp., New York, NY 10013-2412 (US)
(72) Inventor: Bednar, Joseph Anton, Middletown, New Jersey 07748 (US); Unangst, Diane Roberta, Colts Neck, New Jersey 07722 (US); McNair, Bruce Edwin, Holmdel, New Jersey 07733 (US)
(74) Representative: Buckley, Christopher Simon Thirsk

(57) **Abstract**

The present invention discloses an apparatus and method for transmitting a data packet over a wireless network with improved security. Each transmitted message includes three segments. A first segment includes information identifying the originator of the message. A second segment includes a digital signature obtained by hashing and encrypting the data to be transmitted. A third segment includes the data packet. Upon receiving the message, a wireless receiving unit uses the information contained in the first segment to retrieve an encryption key and, thereby, identify the originator of the message. The wireless receiving unit then hashes and encrypts the received data packet according to the same hashing and encryption algorithms used to form the digital signature. The resulting encrypted hashed version of the data packet is compared to the received digital signature in order to establish the integrity of the received data packet.

## Description

### FIELD OF THE INVENTION

The present invention relates generally to communication systems that transmit information via a wireless network. More particularly, the present invention relates to user-identification and the verification of data integrity in wireless communication systems.

### BACKGROUND OF THE INVENTION

As communication over multiple access media, such as wireless networks, has become increasingly popular, the security concerns and risks associated with such communication systems also have increased. Wireless communication systems, for example, pose unique security concerns compared to the security risks associated with wired or tethered systems. Communication over wireless networks is more vulnerable to attack by unauthorized persons using the system in any of a number of ways. Transmission of data in the clear, for example, means that the data can be monitored or intercepted easily by anyone possessing an appropriate receiver. Similarly, transmission of a user's identification in the clear opens the user to traffic analysis.

Many other threats and vulnerabilities are associated with wireless communication. For example, wireless systems are vulnerable to misuse of resources associated with the system, such as the cloning of wireless communication devices by persons who are not subscribers to the network's services. The cloned devices can be programmed to include identification information associated with a legitimate subscriber or the subscriber's device. Such techniques allow the non-subscriber to qualify for service in a fraudulent manner, which may result in unrecoverable costs to the service provider.

Yet another security concern pertaining to the use of wireless systems, involves one person's transmitting information and denying that the information was sent or attributing the transmission to another subscriber. This problem is of particular concern to anyone wishing to transact business using wireless communication systems. Furthermore, if business dealings are to be transacted using wireless systems, the parties to the transaction must be assured that the integrity of the data is preserved.

The security issues mentioned above, among others, suggest the need for efficient and cost-effective authentication and verification techniques for use in wireless communication systems.

### SUMMARY OF THE INVENTION

The present invention discloses a system for transmitting information over a wireless communication system with improved security. This system preferably comprises a wireless transmitting unit for transmitting a message via a wireless network, where the message comprises a first segment including identification information, a second segment including a data packet, and a third segment including a digital signature. The digital signature is obtained by applying a hashing algorithm and an encryption algorithm to the data packet, where the encryption algorithm uses an encryption key corresponding to the identification information. The system further comprises a wireless network and a wireless receiving unit. The wireless receiving unit may comprise circuitry for receiving the message and a memory unit for storing the encryption key corresponding to the identification information. The wireless receiving unit also has a hashing unit for hashing the data packet according to the hashing algorithm to form hashed data and an encryption unit for forming encrypted hashed data by applying the encryption algorithm to the hashed data using the encryption key. In addition, the wireless receiving unit may include a comparing unit for comparing the encrypted hashed data to the digital signature and a processor for controlling the flow of data between other units in the wireless receiving unit.

Other features and advantages of the present invention will be apparent by reference to the following detailed description and accompanying drawings.

### BRIEF DESCRIPTION OF THE DRAWINGS

FIG. 1 illustrates an exemplary wireless communication system according to the present invention.

FIG. 2 shows a signed message having three segments in accordance with the present invention.

FIG. 3 is a flow chart showing the steps for identifying and authenticating the originator of a transmission and verifying the integrity of the transmission according to the method of the present invention.

### DETAILED DESCRIPTION OF THE INVENTION

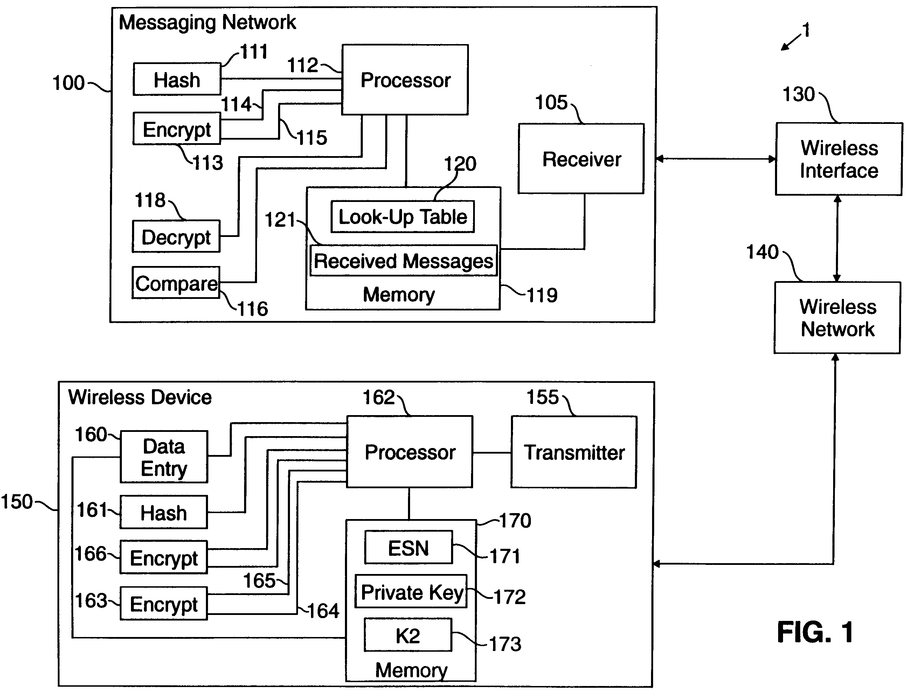

FIG. 1 illustrates an exemplary wireless communication system 1 according to the present invention. The wireless system 1 includes a messaging network 100 which serves as a platform for end-user services such as exchanging messages or mediating transactions between subscribers. Each such subscriber will typically have a wireless device such as wireless device 150. As a result, the messaging network 100 will typically communicate with a large number of wireless devices even though FIG. 1 shows a single such device 150 for simplicity of presentation. A system component, such as the wireless device 150, which transmits information via a wireless communication network generally may be referred to as a wireless transmitting unit.

Information is transferred to and from the messaging network 100 via a wireless interface 130 according to a specified protocol. In FIG. 1, the messaging network 100 may be connected, for example, by an Ethernet format connection to the wireless interface 130, which serves as an interface between the messaging network 100 and a wireless network 140. A system component, such as the messaging network 100, which receives information via a wireless network, may generally be referred to as a wireless receiving unit. The wireless network 140 may suitably be a public packet radio network such as the RAM Mobile Data Network, the ARDIS Network, or any Cellular Digital Packet Data (CDPD) network.

In the system 1, the transfer of information between the wireless interface 130 and the wireless network 140 occurs in either a connectionless or connection-oriented manner. The transfer of information between the wireless network 140 and the wireless device 150 takes place in a connectionless manner according to a protocol specified by the particular wireless network 140. A connectionless transfer of information may be distinguished from a session-oriented approach in which a "handshake" routine typically takes place between the network and a user of or subscriber to the network. The handshake routine typically requires that the user be authenticated as legitimate at the beginning of a session, for example, by using a personal password that identifies the user. The user then sends messages, for example, to the network, after which the session is terminated. In a session-oriented approach, individual messages are not verified or authenticated. In contrast, a connectionless approach does not require that communication between the user and network be initialized and terminated at some later time. Rather, the connectionless approach allows individual packets of information or data, which are self-contained, to be sent to the network without prior negotiation and without prior confirmation of the user with the exception of a possible subscription agreement permitting the subscriber to use the network.

In FIG. 1, the wireless device 150 may be a personal digital assistant (PDA) or personal communicator, or a device for use in a cellular telephone system, such as a digital cellular telephone. It is to be understood, however, that any device that is capable of transmitting and receiving appropriate signals over a wireless network may be used. In the discussion that follows, it will be assumed that the device 150 is a PDA having an data entry unit 160, such as a keyboard, keypad, stylus, or any other suitable means for entering data.

In accordance with the present invention, each wireless device intended for use in the system 1, such as the wireless device 150, is assigned a unique identifier or identification information. The identification information is stored in the device 150, for example, as an electronic serial number (ESN) 171 incorporated into the device 150 at the time of manufacture. By way of example, the ESN 171 may be stored in a memory unit 170. Alternatively, the identification information may be a user name, an account identification, an account name, or a service identification stored in the memory unit 170. Additionally, each subscriber to the messaging network's services is provided with a unique private encryption key, K, for use as explained below. The encryption key, K, is one that can be used with a secure encryption scheme. The key, K, may be, for example, a 56-bit Data Encryption Standard (DES) key for use in a cryptosystem such as the one described in "Data Encryption Standards," Federal Information Processing Standard, Publication No. 46, National Bureau of Standards, January 1977. The private key, K, is entered into the device 150, preferably in a manner not subject to tampering, and is stored for further use in a file 172 in the memory unit 170. The private key may be periodically updated to further increase its security. The private key, K, is intended for the private use of the subscriber alone and should not be disclosed to other individuals.

In the wireless system 1, the messaging network 100 and the wireless device 150 each follow a message-oriented protocol, which resides on the messaging network 100 and the wireless device 150 in a receiver 105 and a transmitter 155, respectively. Both the receiver 105 and the transmitter 155 may suitably be, for example, a radio transceiver connected to a modem.

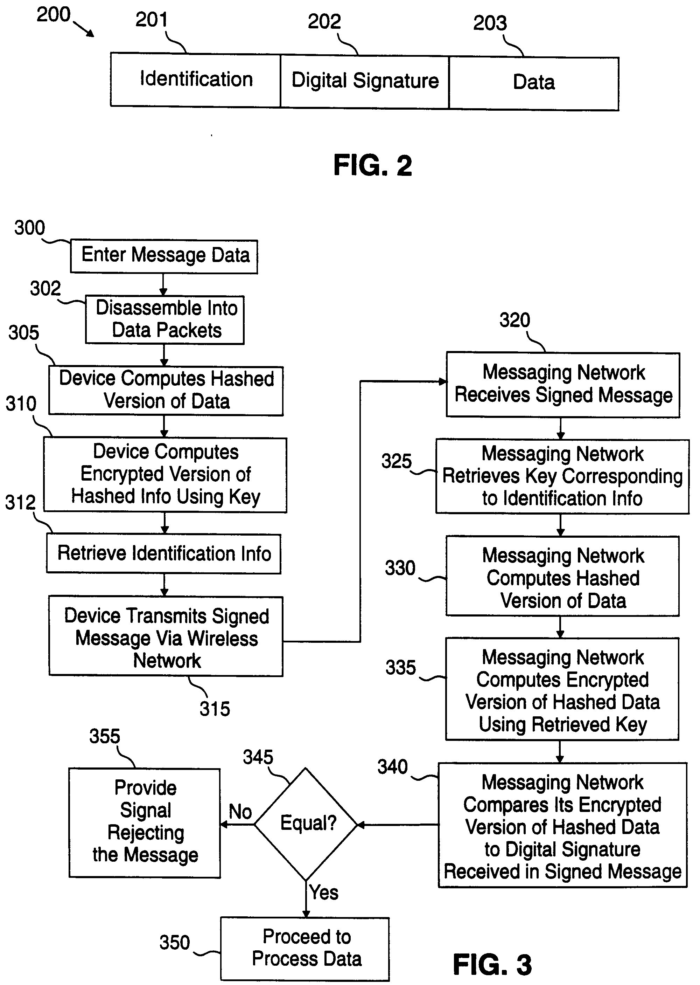

As indicated by FIG. 2, which shows an exemplary message 200, each message transmitted by the wireless device 150 preferably contains three segments. A first segment 201 includes the identification information that is retrieved from the memory unit 170 by the device 150, for example the electronic serial number 171. A second segment 203 includes a data packet that the subscriber wishes to send. Finally, a third segment 202 includes a digital signature as further explained below. A message, such as the message 200, containing the three segments 201, 202 and 203, may be referred to as a signed message.

FIG. 3 is a flow chart showing the steps of sending a message according to the method of the present invention. When the subscriber wishes to send a message via the wireless network 140 using the wireless device 150, the subscriber enters the message data into the device 150 as shown in step 300 of FIG. 3. The message data may be entered into the device 150 by using the data entry unit 160 associated with the device 150. For example, the subscriber could enter the data into the device 150 by using a keypad.

Once the subscriber enters the message data that he wishes to transmit, a processor 162, such as a central processing unit, connected to the data entry unit 160 and to the transmitter 155, disassembles the data into smaller data packets, as shown in step 302. There will, therefore, typically be a plurality of packets of data which, when reassembled, constitute the entire message that the user entered into the data entry unit 160. These data packets may be temporarily stored in the memory unit 170 for further processing. It should be understood, however, that the complete message data may be sent as one data packet. Once the data packets are formed, the processor 162 retrieves the key, K, from the file 172 and proceeds to generate and transmit a signed message for each packet of data as explained in greater detail below. The processor 162 also controls the flow of information to and from other components in the wireless device 150.

As shown in step 305, the device 150 computes a hashed version of a first data packet by applying a pre-defined hashing algorithm to the first data packet to form hashed information. The hashing algorithm is executed by a hashing unit 161 connected to the processor 162. The hashing unit 161 may suitably be an electronic circuit which implements the pre-defined hashing algorithm. In an alternative embodiment, the hashing unit 161 may be a processor, such as a general purpose processor programmed with appropriate software, which implements the hashing algorithm. Such hashing algorithms and implementations thereof are well-known in the art and are described, for example, in "Secure Hash Standard," Federal Information Processing Standard, Publication No. 180/XAB, National Bureau of Standards, May 11, 1993. The subject matter of this publication and the subject matter of all other publications referred to herein are incorporated by reference.

Next, as shown in step 310 of FIG. 3, the device 150 computes an encrypted version of the hashed information according to a primary encryption algorithm using the private key, K, to form encrypted hashed information. The encrypted version of the hashed information is computed by a primary encryption unit 163 connected to the processor 160. The primary encryption unit 163 may be an electronic circuit which implements the primary encryption algorithm. A commercially available AT&T T7000 Data Encryption Processor is also suitable for use as the primary encryption unit 163. The primary encryption algorithm may be a DES encryption algorithm or some other suitable secure encryption algorithm that may be used with the private key, K. The encryption unit 163 is connected to the processor 160, for example, by control lines 164 which provide control signals to the encryption unit 163. Control signals indicate, for example, whether data or the key, K, is to be entered into the encryption unit 163. Also, data lines 165 are used to transfer the plain and encrypted data between the encryption unit 163 and the processor 160.

In an alternative embodiment, the encryption unit 163 may be a processor, such as a general purpose processor programmed with appropriate software, which encrypts the hashed data according to the primary encryption algorithm. Hardware and software implementations of encryption algorithms are well-known in the art and are described more fully, for example, in "DES Modes of Operation," Federal Information Processing Standard, Publication No. 81, National Bureau of Standards, December 2, 1980, and "Guidelines For Implementing and Using The NBS Data Encryption Standard," Federal Information Processing Standards, Publication No. 74, National Bureau of Standards, April 1, 1981.

The encrypted version of the hashed information computed in step 310 is the digital signature referred to above. The digital signature, therefore, is obtained by applying the pre-defined hashing algorithm and the primary encryption algorithm to the first data packet, where the primary encryption algorithm uses the private encryption key, K. Once the device 150 computes the digital signature for the first data packet, the processor 162 retrieves the identification information stored as the ESN 171 as shown in step 312. This identification information is included in the segment 201 of the signed message 200, and the first data packet is included in the segment 203. Next, as shown in step 315, the transmitter 155 transmits a signed message via the wireless network 140.

The preferred order for transmitting the three segments 201-203 is to place the segment 201 containing the identification information, which preferably is of fixed length, at the front of the signed message 200. The segment 203 containing the data packet, which may be of variable length, is placed at the end of the message 200. If, however, the segment 203 is also of fixed length, then it is desirable to transmit it before the segment 202 containing the digital signature. Transmitting segments of fixed length at the front of the signed message makes it easier for the messaging unit 100 to determine where one segment ends and another segment begins. Also, placing the segment 201 at the front of the signed message permits processing at the messaging network 100 to take place without unnecessary delay because the identification information in the segment 201 is needed to begin processing the received message at the messaging network 100. It is to be understood, however, that the segments 201-203 may be transmitted in any order in accordance with the present invention.

Also, in a preferred embodiment, the data packet which is contained in the third segment 203 is also transmitted in an encrypted form. After the processor 160 has disassembled the message data into packets of data and prior to performing the step 305, the first data packet is encrypted using an encryption key, K2, that differs from the private key, K. For this purpose, a secondary encryption unit 166, connected to the processor 160, may be used. The secondary encryption unit 166 may be similar to the primary encryption unit 163 and connected to the processor 162 in a similar manner. The key, K2, may be stored in a file 173 in the memory unit 170. One purpose of the encryption performed by the secondary encryption unit 166 is to prevent unauthorized persons from intercepting the signed message and reading the contents of the data packet.

Once the signed message is transmitted via the wireless network 140, it is received by the wireless interface 130 and transmitted to the messaging network 100, which receives the signed message in the receiver 105 as shown in step 320. The received signed message may be temporarily stored in a file 121 in a memory unit 119 that is connected to the receiver 105.

The memory unit 119 also has a look-up table 120 which stores the encryption key corresponding to each subscriber. The look-up table allows the encryption key corresponding to a particular subscriber to be retrieved based upon the identification information received in the segment 201 of the signed message. A processor 112, such as a central processing unit, is connected to the memory unit 119 and controls the flow of data to and from other units in the messaging network 100. In step 325, the processor 112 retrieves the encryption key that corresponds to the identification information contained in the segment 201 of the signed message. If the individual who used the device 150 to send the signed message is a legitimate subscriber using a legitimate encryption key and a corresponding legitimate wireless device, then the key retrieved by the messaging network 100 in the step 325 is the same as the key, K, used by the subscriber to transmit the signed message.

Next, as shown in step 330, the messaging network 100 computes a hashed version of the data packet received in the third segment 203 according to the same pre-defined hashing algorithm that was used by the device 150 in the step 305 to form hashed data. Execution of the hashing algorithm in the step 330 may be performed by a hashing unit 111 connected to the processor 112. The hashing unit 111 may suitably be an electronic circuit which implements the pre-defined hashing algorithm. In an alternative embodiment, the hashing unit 161 may be a processor, such as a general purpose processor programmed with appropriate software, which implements the hashing algorithm.

Next, in step 335, the messaging network 100 computes an encrypted version of the hashed data, to form encrypted hashed data. The encryption key retrieved in step 325 and an encryption algorithm are used to encrypt the hashed data. The encryption implemented in step 335 depends upon the key that is retrieved from the database 119, which in turn depends upon the identification information that was received in the first segment 201 of the signed message 200. If the subscriber and the device 150 are legitimate, then the encryption algorithm used in the step 310 and the primary encryption algorithm used in the step 335 are the same.

An encryption unit 113, which is connected to the processor 112, executes the encryption algorithm in step 335 using the key retrieved from the memory unit 119 according to known techniques in either hardware or software. The encryption unit 113 may be an electronic circuit which implements the primary encryption algorithm. A commercially available AT&T T7000 Data Encryption Processor is also suitable for use as the encryption unit 113. The encryption unit 113 is connected to the processor 112, for example, by control lines 114 which provide control signals to the encryption unit 113. Control signals indicate, for example, whether data or the retrieved key is to be entered into the encryption device 163. Also, data lines 115 are used to transfer the plain and encrypted data between the encryption unit 113 and the processor 112. In an alternative embodiment, the encryption unit 113 may be a processor, such as a general purpose processor programmed with appropriate software, which encrypts the hashed data according to the primary encryption algorithm.

In step 340, the messaging network 100 compares the encrypted hashed data computed by it in step 335 to the digital signature contained in the second segment 202 of the received signed message 200. A comparing unit 116, which may be an electronic comparing circuit and which is also connected to the processor 112, may be used to perform step 340. In an alternative embodiment, the comparing unit 116 may be a general purpose processor programmed to compare the encrypted hashed data to the digital signature.

As shown in step 345, the next step depends upon the results of the comparison performed in the step 340. If the encrypted hashed data computed by the messaging network 100 is the same as the received digital signature, then the subscriber and device 150 are authenticated as legitimate, and the integrity of the received data packet is deemed to have been preserved during transmission. In step 350, the messaging network 100 proceeds to process the data received in the segment 203. For example, if the established protocol requires that the data packet contained in the third segment 203 be sent in an encrypted form as explained above according to the preferred embodiment, then the messaging network 100 decrypts the data using a decryption unit 118, connected to the processor 112. The decryption unit 118 executes in hardware or software a decryption algorithm which retrieves the original data that was encrypted by encryption unit 166. The decryption unit 118 may be an electronic circuit or a processor, such as a general purpose processor programmed with appropriate software, which executes the decryption algorithm. Such decryption algorithms and decryption devices are well-known in the art. A commercially available AT&T T7000 Data Encryption Processor is also suitable for use as the decryption unit 118.

If, however, the encrypted hashed data computed in the step 335 and the received digital signature are not the same, then, as shown in step 355, the messaging network 100 provides a signal indicating that the data packet 200 is rejected.

Signed messages, incorporating the other data packets that were formed by the processor 160 from the original message data entered into the device 150, are also transmitted by the device 150 and processed by the network 100 according to the same method described in detail above. The network 100 would then reassemble the data packets to reconstruct the complete message originally entered into the device 150 by the user. Finally, the messaging network 100 would process the complete message by sending the data to its ultimate destination if, for example, the message is an e-mail message, or by acting upon it if, for example, the data is a control message to the messaging network 100.

One advantage of the present invention is that it helps prevent fraudulent use of messaging or other services employing wireless networks. The present invention described above provides a means for identifying the entity transmitting data over a wireless network. Furthermore, the present invention helps ensure that only authorized subscribers use the messaging network and that only legitimate devices are used to transmit messages to the messaging network.

Another feature of the present invention is that it verifies the integrity of the received data. By verifying the integrity of the received data, the present invention makes it more difficult for a party to deny having transmitted the data that was actually received. Thus, for example, when parties transact business via a wireless network, the present invention makes it more difficult for one of the parties to repudiate the transaction by claiming that the information received was not the same as the information sent.

Other applications and arrangements within the spirit and scope of the present invention will be readily apparent to persons of ordinary skill in the art. For example, although the present invention has been described in the context of a wireless communication system 1 in which a signed message is transmitted by the wireless device 150 to the messaging network 100, the roles of the device 150 and the network 100 may be reversed. In other words, the messaging network may serve as the wireless transmitting unit which sends a signed message, and the wireless device may serve as the wireless receiving unit which receives and verifies the signed message. Furthermore, other devices or system components which communicate via a wireless network may be configured for use in accordance with the present invention. The present invention is, therefore, limited only by the appended claims.

## Claims

1. A wireless communication system comprising:
a wireless transmitting unit for transmitting a message via a wireless network, said message comprising:
(a) a first segment including identification information;
(b) a second segment including a data packet; and
(c) a third segment including a digital signature obtained by applying a hashing algorithm and an encryption algorithm to said data packet, where said encryption algorithm uses an encryption key corresponding to said identification information;
a wireless network; and
a wireless receiving unit comprising:
(a) means for receiving said message;
(b) a memory unit for storing the encryption key corresponding to said identification information;
(c) a hashing unit for hashing said data packet according to said hashing algorithm to form hashed data;
(d) an encryption unit for forming encrypted hashed data by applying said encryption algorithm to said hashed data using said encryption key;
(e) a comparing unit for comparing said encrypted hashed data to said digital signature; and
(f) a processor for controlling the flow of data to and from other components in said wireless receiving unit.

2. The system of claim 1 wherein the wireless transmitting unit comprises:
(a) a data entry unit for entering message data, comprising said data packet, into said wireless transmitting unit;
(b) a memory unit for storing said encryption key and said identification information;
(c) a hashing unit for hashing said data packet according to said hashing algorithm to form hashed information;
(d) an encryption unit for forming said digital signature by applying said encryption algorithm to said hashed information; and
(e) a processor for controlling the flow of information to and from other components in said wireless transmitting unit.

3. The system of claim 2 wherein the memory unit of said wireless transmitting unit stores the identification information as an electronic serial number.

4. The system of claim 3 wherein the memory unit in said wireless receiving unit stores said encryption key in a look-up table.

5. The system of claim 4 wherein the hashing unit in the wireless transmitting unit and the hashing unit in the wireless receiving unit are electronic circuits.

6. The system of claim 4 wherein the encryption unit in the wireless transmitting unit and the encryption unit in the wireless receiving unit are electronic circuits.

7. The system of claim 4 wherein said processor is programmed to disassemble said message data into a plurality of data packets.

8. A method of identifying a user of a wireless communication system and verifying the integrity of data transmitted in said communication system, said method comprising the steps of:
sending a message via a wireless network, where said message comprises:
(a) a first segment including identification information;
(b) a second segment including a data packet; and
(c) a third segment including a digital signature obtained by applying a hashing algorithm and an encryption algorithm to said data packet, where said encryption algorithm uses a private encryption key;
receiving said message;
hashing said data packet according to said hashing algorithm to form hashed data after performing the step of receiving said message;
encrypting said hashed data with said encryption algorithm and said encryption key to form encrypted hashed data; and
comparing said digital signature to the encrypted hashed data so as to verify the integrity of the data packet.

9. A method of verifying the integrity of a data packet transmitted via a wireless communication network, said method comprising the steps of:
hashing the data packet according to a hashing algorithm to form hashed information;
encrypting the hashed information with an encryption algorithm using a private encryption key to form a digital signature;
retrieving identification information;
transmitting a signed message via a wireless network;
receiving said signed message;
hashing said data packet according to said hashing algorithm to form hashed data after performing the step of receiving said signed message;
encrypting said hashed data with said encryption algorithm and said encryption key to form encrypted hashed data; and
comparing said digital signature to the encrypted hashed data so as to verify the integrity of the data packet.

10. A method of sending a message via a wireless network, said method comprising the steps of:
entering message data into a wireless transmitting unit;
disassembling said message data into a plurality of data packets;
performing for each data packet the steps of:
(a) hashing the data packet according to a hashing algorithm to form hashed information;
(b) encrypting the hashed information with an encryption algorithm using a private encryption key to form a digital signature;
(c) retrieving identification information;
(d) transmitting a signed message via a wireless network;
(d) receiving said signed message;
(e) hashing said data packet according to said hashing algorithm to form hashed data after performing the step of receiving said signed message;
(f) encrypting said hashed data with said encryption algorithm and said encryption key to form encrypted hashed data; and
(g) comparing said digital signature to the encrypted hashed data so as to verify the integrity of the data packet after said message is received; and
reassembling said plurality of data packets to reconstruct said message data.

11. The method of claim 9 or 10 wherein the step of transmitting a signed message comprises the step of transmitting a message having:
(a) a first segment including said identification information;
(b) a second segment including said data packet; and
(c) a third segment including said digital signature.

12. The method of claim 11 wherein the step of transmitting a signed message further comprises the step of sending said first segment at the front of said signed message.

13. The method of claim 8 or 12 further including the step of retrieving the encryption key after performing the step of receiving said message.

14. The method of claim 13 wherein the step of retrieving the encryption key comprises the step of retrieving said encryption key based upon said identification information.
